# EUROPEAN PATENT APPLICATION

(11) **EP 4 790 366 A1**
(43) Date of publication of application: **12.08.2026**
(21) Application number: 24874303.1
(22) Date of filing: 03.06.2024
(51) Int. Cl.: G01F 1/00, G01F 1/34, G01F 1/50

(54) **FLOW RATE ESTIMATING DEVICE AND FLOW RATE ESTIMATING METHOD**

(30) Priority: 05.10.2023 JP 2023173530
(71) Applicant: SMC Corporation, Tokyo 104-0031 (JP)
(72) Inventor: KATSUMATA Koichi, Chiba 277-0871 (JP); OSHIMA Yuta, Chiba 277-0871 (JP)
(74) Representative: Keil & Schaafhausen Patentanwälte PartGmbB
(86) International application number: PCT/JP2024/020136
(87) International publication number: WO 2025/074686

(57) **Abstract**

A flow rate estimating device (20) comprises: a first flow rate calculating unit (64) that calculates a first flow rate value (Q1) of a gas (G) flowing through a pipe (10) when the gas forms a laminar flow; a second flow rate calculating unit (66) that calculates a second flow rate value (Q2) of the gas when the gas forms a turbulent flow; and an estimating unit (68) that estimates the flow rate of the gas by performing weighted averaging of the first flow rate value and the second flow rate value using an apportionment ratio (α) corresponding to a pipe width (D) and pipe length (L) of the pipe.

## Description

### TECHNICAL FIELD

The present invention relates to a flow rate estimating device and a flow rate estimating method.

### BACKGROUND ART

JP 2001-194193 A discloses a flowmeter in which a laminar flowmeter is provided on an upstream part of a measurement tube and a vortex flowmeter is provided on a downstream part of the measurement tube. The flowmeter can measure a wide flow rate range from a minute flow rate region to a large flow rate region.

### SUMMARY OF THE INVENTION

According to the flowmeter disclosed in JP 2001-194193 A, pipes (thin tubes) for flow rate measurement by a laminar flowmeter is provided. In order to extend the flow rate measurement range to a flow rate at which a laminar flow is not formed in a single pipe, it is necessary to use a plurality of pipes in which a laminar flow is formed. Therefore, there is a problem that the flowmeter is increased in size. Furthermore, downstream of the laminar flowmeter, a vortex generator for flow measurement by means of the vortex flowmeter is mounted in the measurement tube. Therefore, the flowmeter is further increased in size. The increase in the size of the flowmeter leads to an increase in cost.

The present invention has the object of solving the aforementioned problems.

A first aspect of the present invention is characterized by a flow rate estimating device including a first flow rate calculation unit configured to calculate a first flow rate value of a gas flowing through an interior of a passage in a case where the gas forms a laminar flow, a second flow rate calculation unit configured to calculate a second flow rate value of the gas in a case where the gas forms a turbulent flow, and an estimating unit configured to estimate a flow rate of the gas by performing weighted averaging of the first flow rate value and the second flow rate value using a proportion based on a passage width and a passage length of the passage.

A second aspect of the present invention is characterized by a flow rate estimating method including a first flow rate calculation step of calculating a first flow rate value of a gas flowing through an interior of a passage in a case where the gas forms a laminar flow, a second flow rate calculation step of calculating a second flow rate value of the gas in a case where the gas forms a turbulent flow, and an estimation step of estimating a flow rate of the gas by performing weighted averaging of the first flow rate value and the second flow rate value using a proportion based on a passage width and a passage length of the passage.

According to the present invention, the flow rate estimating device can be reduced in size.

The above and other objects, features, and advantages of the present utility model will be easily understood from the following description of preferred embodiments, which will be described with reference to the accompanying drawings.

### BRIEF DESCRIPTION OF DRAWINGS

[FIG. 1] FIG. 1 is a diagram schematically illustrating a passage and a flow rate estimating device used for estimating a flow rate of a gas flowing through the interior of the passage;
[FIG. 2] FIG. 2A is a diagram for explaining a rectangular cross section of the passage; FIG. 2B is a diagram for illustrating a rectangular cross section of the passage; and FIG. 2C is a diagram for explaining the passage width of the passage;
[FIG. 3] FIG. 3 is a diagram illustrating a plate-shaped member in which the passage is formed;
[FIG. 4] FIG. 4 is a diagram for explaining a case where there are a plurality of passages;
[FIG. 5] FIG. 5 is a flowchart illustrating a processing procedure of a gas flow rate estimation process; and
[FIG. 6] FIG. 6A and 6B are diagrams illustrating evaluation results of flow rate estimation in the case where laminar flows and turbulent flows are mixed in the passage.

### DETAILED DESCRIPTION OF THE INVENTION

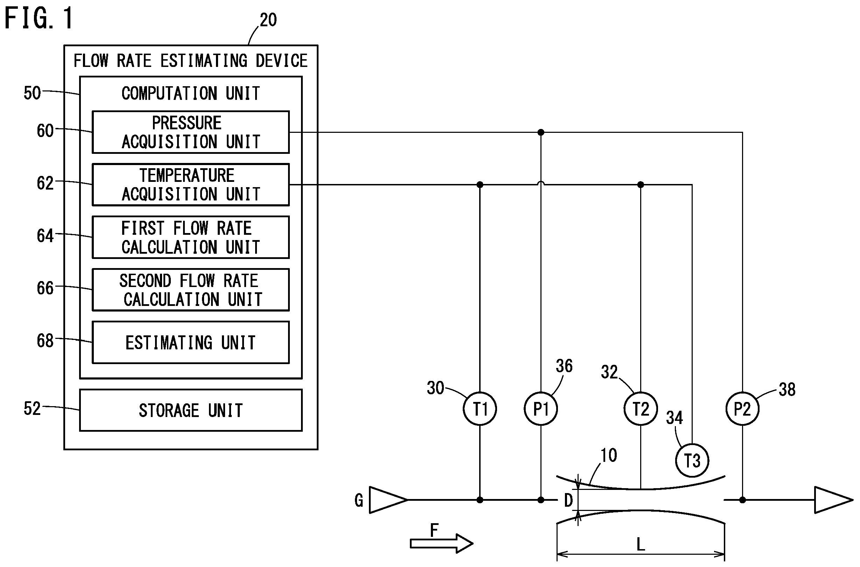

FIG. 1 is a diagram schematically illustrating a passage 10 and a flow rate estimating device 20 used for estimating a flow rate of a gas G flowing through the interior of the passage 10. The gas G flows into the passage 10 in a flow direction F, flows into and through the interior of the passage 10, and flows out of the passage 10.

When a passage width D of the passage 10 is sufficiently wide, the gas G flowing through the interior of the passage 10 forms a turbulent flow due to the inertial force of the gas G. In this case, the flow rate of the gas G depends on an effective cross-sectional area in the passage 10. The effective cross-sectional area is a function of a passage width D of the passage 10. That is, the flow rate of the gas G forming the turbulent flow depends on the passage width D of the passage 10 as described later. For example, the flow rate of the gas G is larger as the passage width D of the passage 10 is larger.

When the passage width D of the passage 10 is extremely narrow, the gas G flowing through the interior of the passage 10 at a minute flow rate forms a laminar flow due to the viscosity of the gas G. In this case, the flow rate of the gas G depends on the passage width D and a passage length L of the passage 10 as described later. That is, the flow rate of the gas G is smaller, as the passage width D of the passage 10 is narrower. Further, the flow rate of the gas G is smaller, as the passage length L of the passage 10 is longer. When the passage width D of the passage 10 is not too narrow and not too wide, a laminar flow and a turbulent flow are mixed in the passage 10.

A first temperature sensor 30 measure a temperature T1 of the gas G flowing through the interior of the passage 10. In FIG. 1, the first temperature sensor 30 is disposed outside the passage 10 on the assumption that the same measurement value as that in the case where the first temperature sensor 30 is disposed inside the passage 10 is obtained. A second temperature sensor 32 is disposed in the passage 10 or in the vicinity thereof, and measures a temperature T2 of the passage 10. A third temperature sensor 34 is disposed around the passage 10 and measures a temperature T3 around the passage 10.

A first pressure sensor 36 is disposed at or near the gas inlet of the passage 10 and measures a first pressure P1 of the gas G flowing into the interior of the passage 10. A second pressure sensor 38 is disposed at or near the gas outlet of the passage 10 and measures a second pressure P2 of the gas G flowing out of the passage 10.

The flow rate estimating device 20 includes a computation unit 50 and a storage unit 52. The computation unit 50 includes a processor such as a CPU (Central Processing Unit) or a GPU (Graphics Processing Unit) or the like. More specifically, the computation unit 50 contains a processing circuitry.

The storage unit 52 includes a volatile memory such as a RAM (Random Access Memory) or the like, and a nonvolatile memory such as a ROM (Read Only Memory) or a flash memory or the like. The volatile memory is used as a working memory for the processor. The nonvolatile memory stores programs to be executed by the processor and other necessary data such as a proportion α.

The computation unit 50 includes a pressure acquisition unit 60, a temperature acquisition unit 62, a first flow rate calculation unit 64, a second flow rate calculation unit 66, and an estimating unit 68. The pressure acquisition unit 60, the temperature acquisition unit 62, the first flow rate calculation unit 64, the second flow rate calculation unit 66, and the estimating unit 68 are realized by the computation unit 50 executing a program that is stored in the storage unit 52.

At least a part of the pressure acquisition unit 60, the temperature acquisition unit 62, the first flow rate calculation unit 64, the second flow rate calculation unit 66, and the estimating unit 68 may be realized by an integrated circuit such as an application specific integrated circuit (ASIC) or a field programmable gate array (FPGA), or an electronic circuit including a discrete device.

The pressure acquisition unit 60 acquires the first pressure P1 of the gas G flowing into the interior of the passage 10 from the first pressure sensor 36 through communication or the like. The pressure acquisition unit 60 acquires the second pressure P2 of the gas G flowing out of the passage 10 from the second pressure sensor 38 through communication or the like.

The temperature acquisition unit 62 acquires the temperature T1 of the gas G flowing through the interior of the passage 10 from the first temperature sensor 30 by communication or the like. The temperature acquisition unit 62 acquires the temperature T2 of the passage 10 from the second temperature sensor 32 by communication or the like. The temperature acquisition unit 62 acquires the temperature T3 around the passage 10 from the third temperature sensor 34 by communication or the like.

The first flow rate calculation unit 64 calculates a first flow rate value Q1 of the gas G in the case where the gas G flowing through the interior of the passage 10 forms a laminar flow. When the gas G forms a laminar flow, the first flow rate value Q1 can be calculated using the Hagen-Poiseuille equation (Equation (1)). As shown in Equation (1), the first flow rate value Q1 is calculated on the basis of the first pressure P1, the second pressure P2, the passage width D and the passage length L of the passage 10, the coefficient of viscosity η of the gas G, and the temperature correction term f(T). The temperature correction term f(T) is determined on the basis of the temperature T1 of the gas G. $Q 1 = \frac{{πD}^{4}}{128 ηL} ⋅ \frac{\left(P1+P2\right)}{2} ⋅ \left(P1-P2\right) ⋅ f \left(T\right)$

The second flow rate calculation unit 66 calculates a second flow rate value Q2 of the gas G in the case where the gas G flowing through the interior of the passage 10 forms a turbulent flow. When the gas G forms the turbulent flow, the second flow rate value Q2 can be calculated using Equation (2) or Equation (3). As shown in the Equation (2) and Equation (3), the second flow rate value Q2 is calculated on the basis of the first pressure P1, the second pressure P2, the effective cross-sectional area S of the passage 10, and the temperature correction term g(T). The temperature correction term g(T) is determined on the basis of the temperature T1 of the gas G. $Q 2 = 240 ⋅ S ⋅ \sqrt{\left(P2+0.1\right) ⋅ \left(P1-P2\right)} ⋅ g \left(T\right)$ $Q 2 = 120 ⋅ S ⋅ \left(P1+0.1\right) ⋅ g \left(T\right)$

In the case where the flow of the gas G forming the turbulent flow is a subsonic flow, Equation (2) is used, and in the case where the flow is a sonic flow, Equation (3) is used. In the case where the pressure ratio represented by the ratio of the first pressure P1 to the second pressure P2 (critical pressure ratio P1/P2) is smaller than a predetermined ratio (for example, 1.893), the flow of the gas G is a subsonic flow. When the pressure ratio is higher than or equal to the predetermined ratio, the flow of the gas G is a sonic flow.

Referring to Equation (1), it can be seen that, in the case where the flow of the gas G is a laminar flow, the first flow rate calculation unit 64 calculates the first flow rate value Q1 on the basis of the pressure difference between the first pressure P1 and the second pressure P2. Referring to Equation (2), it can be seen that, in the case where the flow of the gas G is a turbulent flow and a subsonic flow, the second flow rate calculation unit 66 calculates the second flow rate value Q2 on the basis of the square root of the pressure difference between the first pressure P1 and the second pressure P2. Referring to Equation (3), it can be seen that, in the case where the flow of the gas G is a turbulent flow and a sonic flow, the second flow rate calculation unit 66 calculates the second flow rate value Q2 on the basis of the first pressure P1.

The estimating unit 68 calculates a weighted average value QWA by performing the weighted averaging of the first flow rate value Q1 and the second flow rate value Q2 using a proportion α corresponding to the passage width D and the passage length L of the passage 10. The proportion α is a value greater than or equal to 0 and less than or equal to 1. The weighted average value QWA of the first flow rate value Q1 and the second flow rate value Q2 is obtained by summing a value obtained by multiplying the first flow rate value Q1 by the proportion α and a value obtained by multiplying the second flow rate value Q2 by a value obtained by subtracting the proportion α from 1. That is, the weighted average value QWA obtained by performing the weighted averaging of the first flow rate value Q1 and the second flow rate value Q2 is calculated using Equation (4). $QWA = Q 1 ⋅ α + Q 2 ⋅ \left(1-α\right)$

As described above, the flow of the gas G flowing through the interior of the passage 10 includes cases of a laminar flow, a turbulent flow, and a flow in which the laminar flow and the turbulent flow are mixed, depending on the passage width D of the passage 10. In the case where the flow of the gas G flowing through the interior of the passage 10 is a laminar flow, the value of the proportion α is 1 in Equation (4). In the case where the flow of the gas G flowing through the interior of the passage 10 is a turbulent flow, the value of the proportion α is 0 in Equation (4).

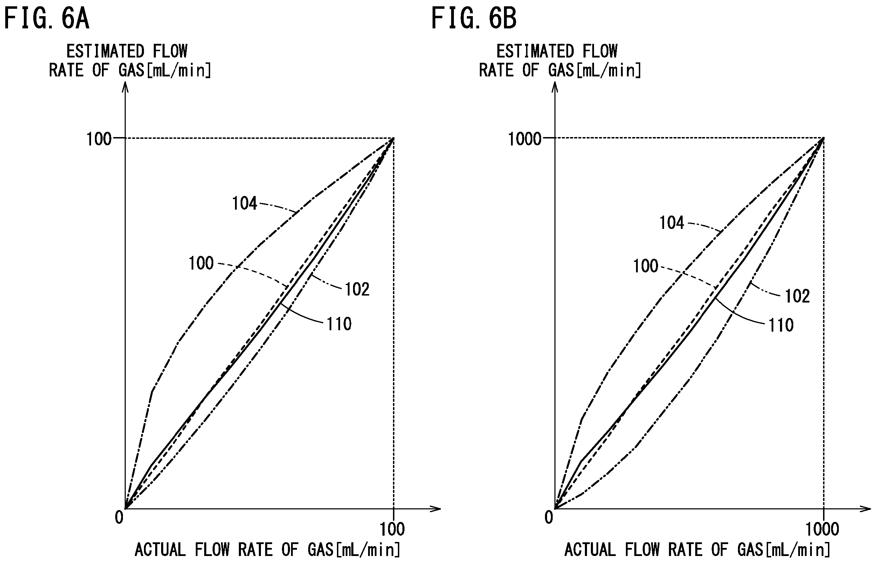

In the case where a laminar flow and a turbulent flow are mixed in the passage 10, the value of the proportion α is greater than 0 and smaller than 1. That is, the flow rate Q of the gas G is estimated using the weighted average value QWA obtained by performing the weighted averaging of the first flow rate value Q1 and the second flow rate value Q2. The evaluation results of estimating the flow rate Q using the weighted average value QWA will be described later using FIG. 6A and FIG. 6B.

As described above, in the case where the passage width D of the passage 10 is sufficiently wide, the gas G flowing through the interior of the passage 10 forms a turbulent flow. In the case where the passage width D is extremely narrow, the gas G flowing through the interior of the passage 10 forms a laminar flow. Therefore, the proportion α is larger as the passage width D is narrower. In addition, in the case where the laminar flow and the turbulent flow are mixed in the passage 10, the viscosity of the gas G is more likely to affect the flow of the gas G through the interior of the passage 10 as the passage width D is narrower or the passage length L is longer, and thus the proportion α is larger.

The proportion α is determined through experiment in which the gas G is caused to flow through the passage 10 at a predetermined flow rate. The proportion α determined through experiment is stored in the storage unit 52 as described above. The estimating unit 68 calculates the weighted average value QWA of the first flow rate value Q1 and the second flow rate value Q2 using the proportion α stored in the storage unit 52.

The estimating unit 68 can estimate the weighted average value QWA obtained using Equation (4), as the flow rate Q of the gas G. It is preferable that a linear expansion coefficient of the passage 10 and heat exchange between the passage 10 and the surroundings of the passage 10 be taken into consideration for the flow rate Q of the gas G. In this case, the estimating unit 68 estimates the flow rate Q of the gas G by correcting the weighted average value QWA on the basis of the temperature T2 of the passage 10 and the temperature T3 around the passage 10. That is, the estimating unit 68 estimates the flow rate Q of the gas G, by using the weighted average value QWA obtained by using Equation (4), and Equation (5) on the basis of the temperature T2 and the temperature correction term h(T) in accordance with the temperature T3. $Q = QWA ⋅ h \left(T\right)$

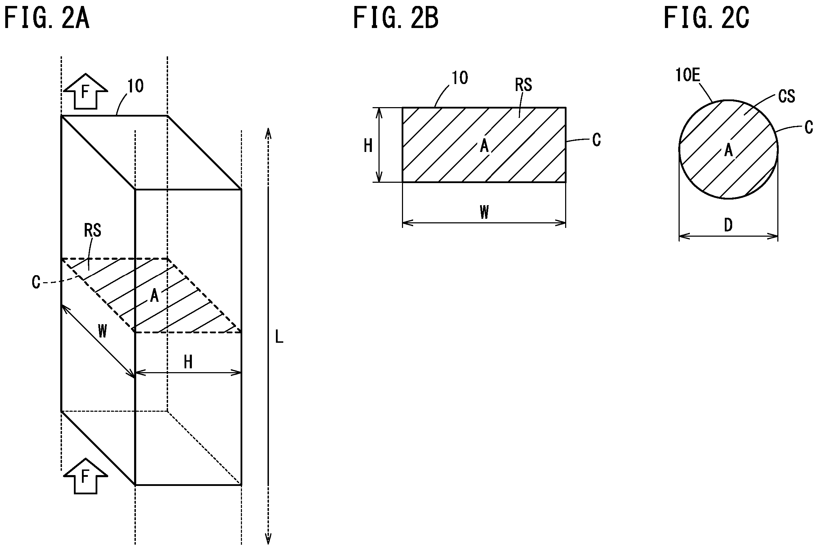

When the cross-sectional shape of the passage 10 is a circle, the passage width D of the passage 10 described above is the diameter of the circle. For example, in the case where the gas G flowing through the interior of the passage 10 forms a laminar flow, the flow rate Q of the gas G is very small, and the passage width D of the passage 10 for a minute flow rate is extremely narrow. As the passage width D is narrower, it is more difficult to manufacture the passage 10 having a circular cross-sectional shape, and the cost increases. When the passage width D is narrow, the passage 10 having a rectangular cross-sectional shape is easier to manufacture than the passage 10 having a circular cross-sectional shape. The passage width D of the passage 10 having a rectangular cross section RS will be described with reference to FIGS. 2A, 2B, and 2C.

FIG. 2A is a diagram for explaining the rectangular cross section RS of the passage 10. The rectangular cross section RS is a cut surface in the case where the passage 10 is cut perpendicularly to a flow direction F of the gas G flowing through the interior of the passage 10 having the passage length L. In FIG. 2A, a width W of the rectangular cross section RS, a height H of the rectangular cross section RS, a perimeter C of the rectangular cross section RS, and an area A of the rectangular cross section RS are shown.

FIG. 2B is a diagram for illustrating the rectangular cross section RS of the passage 10. The perimeter C of the rectangular cross section RS is expressed by Equation (6) on the basis of the width W of the rectangular cross section RS and the height H of the rectangular cross section RS. The area A of the rectangular cross section RS is expressed by Equation (7) on the basis of the width W of the rectangular cross section RS and the height H of the rectangular cross section RS. $C = 2 \left(W+H\right)$ $A = WH$

FIG. 2C is a diagram for explaining the passage width D of the passage 10. In FIG. 2C, a circular cross section CS of an equivalent passage 10E equivalent to the passage 10 is shown. In general, the diameter of the circular cross section CS having a perimeter C and an area A that are the same as the perimeter C and the area A of the rectangular cross section RS, respectively, is known as the equivalent diameter of the rectangular cross section RS. In the present embodiment, the equivalent diameter of the rectangular cross section RS is used as the passage width D of the passage 10. Therefore, the passage width D of the passage 10 is expressed by Equation (8). Using Equations (6), (7), and (8), the passage width D of the passage 10 is expressed by Equation (9). $D = 4 A / C$ $D = 2 WH / \left(W+H\right)$

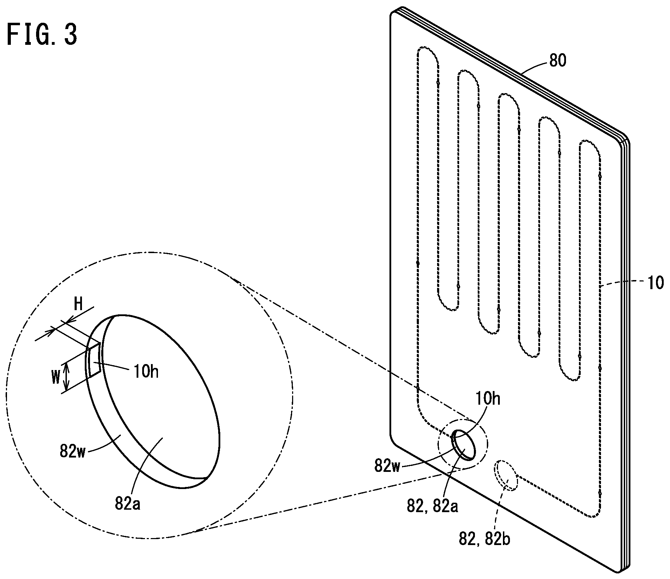

FIG. 3 is a diagram illustrating a plate-shaped member 80 in which the passage 10 is formed. Since the passage 10 is formed in a thin and flat plate-shaped member 80, the passage 10 having a narrow passage width D has a rectangular cross section RS.

The plate-shaped member 80 is obtained by stacking a plurality of thin metal sheets. A rectangular groove is formed in each of the metal sheets by etching. The adjacent metal thin sheets are overlapped with each other, and thereby the groove functions as a part of the passage 10. A partial passage is formed by overlapping a thin metal sheet having a groove functioning as a part of the passage 10 and a thin metal plate adjacent thereto. The plurality of thin metal sheets are laminated, and the plurality of partial passages communicate with each other, thereby forming the passage 10.

The plate-shaped member 80 has a recessed portion 82 on each of the two flat surfaces of the plate-shaped member 80. That is, a recessed portion 82a is provided on one flat surface of the plate-shaped member 80, and a recessed portion 82b is provided on another flat surface.

One end 10h of the passage 10 is formed on a part of a peripheral wall 82w of the recessed portion 82a. Another end (not shown) of the passage 10 is formed in a part of a peripheral wall of the recessed portion 82b. For example, the gas G flows from the one end 10h of the passage 10 to the other end. The entire length from the one end 10h to the other end of the passage 10 corresponds to the passage length L described above.

The passage width D and the passage length L of the passage 10 are determined through experiment or the finite element method analysis. For example, the passage width D and the passage length L are determined such that the flow rate Q when the maximum value of the pressure difference between the first pressure P1 and the second pressure P2 of the gas G flowing through the passage 10 is 100 [kPa] is 0.1 [mL/min]. At this time, the passage width D is determined, for example, in consideration of the limit of the processing accuracy by the etching described above.

The passage length L is determined according to the flow rate Q described above. For example, the passage width D and the passage length L are determined so as to satisfy L = 7000D. In the passage 10, the flow rate Q when the pressure difference is 10 [kPa] is 0.01 [mL/min] corresponding to 1/10 of 0.1 [mL/min].

The same applies to a case where the passage width D and the passage length L are determined such that the flow rate Q when the maximum value of the pressure difference between the first pressure P1 and the second pressure P2 is 100 [kPa] becomes 1000 [mL/min]. In this case, the passage width D and the passage length L are determined so as to satisfy, for example, L = 500D. In the passage 10, the flow rate Q when the pressure difference is 10 [kPa] is 100 [mL/min] corresponding to 1/10 of 1000 [mL/min].

FIG. 3 shows the one end 10h of the passage 10 formed on the peripheral wall 82w of the recessed portion 82a of the plate-shaped member 80. The passage 10 has the rectangular cross section RS. Therefore, the width and height of the one end 10h of the passage 10 are equal to the width W and height H of the rectangular cross section RS described above. The width and height of the other end of the passage 10 formed on the peripheral wall of the recessed portion 82b also coincide with the width W and height H of the rectangular cross section RS described above.

An aspect ratio R of the rectangle formed by the outer periphery of the rectangular cross section RS is preferably greater than or equal to 1 and less than or equal to 2. The aspect ratio R is a value of a ratio of a long side to a short side of the width W and the height H of the rectangular cross section RS as expressed by Expression (10). That is, the aspect ratio R is always greater than or equal to 1. When the aspect ratio R is greater than 2, the center of the rectangular cross section RS is separated from the short sides of the rectangular cross section RS, and thus the inertial force of the gas G described above is increased. Therefore, the aspect ratio R is preferably greater than or equal to 1 and less than or equal to 2. According to the experiment and finite element method analysis, the aspect ratio R is more preferably greater than or equal to 1 and less than or equal to 1.6. $R = max \left\{W, H\right\} / min \left\{W, H\right\}$

As described above, the passage width D and the passage length L of the passage 10 are determined through experiment or finite element method analysis. As a result, the passage length L may become too long. In this case, the passage length L can be suppressed by increasing the passage width D. However, when the passage width D is increased, the proportion α is changed. As described above, the proportion α is determined through experiment in which the gas G is caused to flow through the passage 10 at a predetermined flow rate. In this way, it is necessary to determine the proportion α in the case where the passage width D is widened.

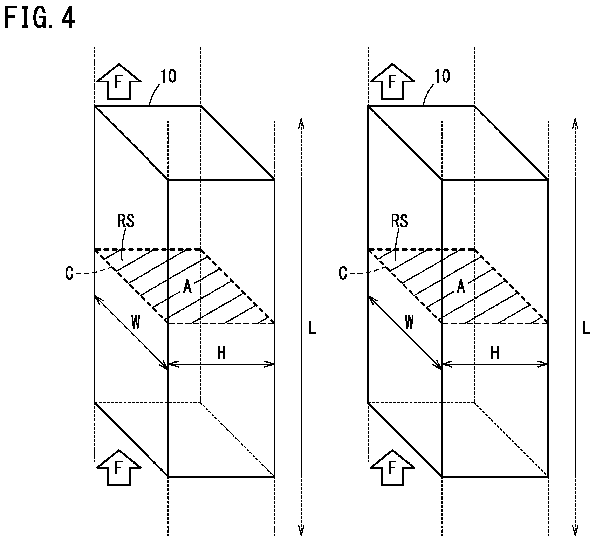

In order to suppress the passage length L without increasing the passage width D, a plurality of passages 10 having the same passage width D and the same passage length L may be provided. FIG. 4 is a diagram for explaining a case where a plurality of the passages 10 are provided. In the example shown in FIG. 4, by providing the two passages 10 in parallel, the passage length L can be suppressed to 1/2 as compared with the case where the single passage 10 is used.

The proportion α is determined depending on the passage width D and the passage length L of each of the plurality of passages 10. Therefore, in the example shown in FIG. 4, the same proportion α is used for all the passages 10 because the passage width D and the passage length L are the same dimensions.

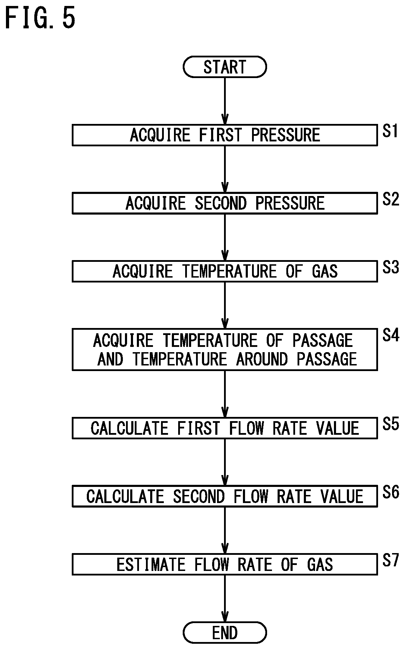

FIG. 5 is a flowchart illustrating a processing procedure of a flow rate estimation process of the gas G. The present processing procedure is performed by the computation unit 50 of the flow rate estimating device 20 executing a program that is stored in the storage unit 52. The present processing procedure is performed in response to an instruction from a user of the flow rate estimating device 20 or a host device of the flow rate estimating device 20.

When the present processing procedure is started, in step S1, the pressure acquisition unit 60 acquires the first pressure P1 of the gas G flowing into the interior of the passage 10 from the first pressure sensor 36. In step S2, the pressure acquisition unit 60 acquires the second pressure P2 of the gas G flowing out of the passage 10 from the second pressure sensor 38.

In step S3, the temperature acquisition unit 62 acquires the temperature T1 of the gas G flowing through the interior of the passage 10 from the first temperature sensors 30. In step S4, the temperature acquisition unit 62 acquires the temperature T2 of the passage 10 and the temperature T3 around the passage 10 from the second temperature sensor 32 and third temperature sensor 34, respectively.

In step S5, the first flow rate calculation unit 64 calculates the first flow rate value Q1 of the gas G in the case that the gas G flowing through the interior of the passage 10 forms a laminar flow. Specifically, the first flow rate value Q1 is calculated using Equation (1). In step S6, the second flow rate calculation unit 66 calculates the second flow rate value Q2 of the gas G in the case where the gas G flowing through the interior of the passage 10 forms a turbulent flow. Specifically, the second flow rate value Q2 is calculated using Equation (2) or Equation (3). In step S7, the estimating unit 68 estimates the flow rate Q of the gas G by performing the weighted averaging of the first flow rate value Q1 and the second flow rate value Q2 using the proportion α. Specifically, the flow rate Q is calculated using Equation (4) and Equation (5). When the process of step S7 is completed, the present processing procedure comes to an end.

FIG. 6A and 6B are diagrams illustrating evaluation results of flow rate estimation in the case where laminar flows and turbulent flows are mixed in the passage 10. The value on the horizontal axis indicates the actual flow rate Q of the gas G, and the value on the vertical axis indicates the estimated flow rate Q of the gas G. FIGS. 6A and 6B each illustrate a graph 100 representing an ideal relationship between the estimated flow rate Q of the gas G and the actual flow rate Q of the gas G. In each of the graphs 100, the estimated flow rate Q matches the actual flow rate Q of the gas G, and thus the graphs 100 each show a proportional relationship.

Further, FIGS. 6A and 6B each illustrate a graph 102 representing a relationship between the estimated flow rate Q of the gas G and the actual flow rate Q of the gas G in the case where the first flow rate value Q1 is used as the estimated flow rate Q of the gas G. Further, FIGS. 6A and 6B each illustrate a graph 104 representing a relationship between the estimated flow rate Q of the gas G and the actual flow rate Q of the gas G in the case where the second flow rate value Q2 is used as the estimated flow rate Q of the gas G.

Further, FIGS. 6A and 6B each illustrate a graph 110 representing a relationship between the estimated flow rate Q of the gas G and the actual flow rate Q of the gas G in the case where the flow rate Q of the gas G estimated by using Equations (4) and (5) is used as the estimated flow rate Q of the gas G.

FIG. 6A illustrates an evaluation result of the flow rate estimation using a passage 10, in which the passage width D and the passage length L thereof are determined such that the flow rate Q when the maximum value of the pressure difference between the first pressure P1 and the second pressure P2 is 100 [kPa] becomes 100 [mL/min]. That is, the maximum flow rate of the passage 10 is 100 [mL/min]. In the example shown in FIG. 6A, the graph 110 corresponding to the flow rate Q estimated by using the weighted average value QWA with the proportion α set to 0.86 substantially matches the graph 100 representing the ideal relationship between the estimated flow rate Q of the gas G and the actual flow rate Q of the gas G.

FIG. 6B illustrates an evaluation result of the flow rate estimation using two passages 10 having the same dimensions, in which the passage width D and the passage length L thereof are determined such that the flow rate Q when the maximum value of the pressure difference between the first pressure P1 and the second pressure P2 is 100 [kPa] becomes 1000 [mL/min]. That is, the maximum flow rate of these two passages 10 is 1000 [mL/min]. In the example shown in FIG. 6B, the graph 110 corresponding to the flow rate Q estimated by using the weighted average value QWA with the proportion α set to 0.58 substantially matches the graph 100 representing the ideal relationship between the estimated flow rate Q of the gas G and the actual flow rate Q of the gas G.

As shown in FIGS. 6A and 6B, it is understood that the flow rate Q estimated using Equation (4) and Equation (5) is a good value.

A group of the passages 10 that can select either the passage 10 corresponding to the maximum flow rate of 100 [mL/min] or the passage 10 corresponding to the maximum flow rate of 1000 [mL/min] may be used. In accordance with this feature, it is possible to extend the flow rate measurement range of the flow rate estimating device 20. A solenoid valve may be used for switching the passages 10. The same applies to a case where a passage 10 corresponding to another different maximum flow rate is used.

In the present embodiment, the value calculated by Equation (1) is used as-is for the first flow rate value Q1, and the value calculated by Equation (2) or (3) is used as-is for the second flow rate value Q2. As described with reference to FIGS. 6A and 6B, the estimated flow rate Q and the actual flow rate Q of the gas G are substantially proportional to each other. Therefore, values obtained by normalizing the first flow rate value Q1 and the second flow rate value Q2 to, for example, a range from 0 to 1 may be used for the weighted averaging. That is, the values calculated by respective Equations (1), (2), and (3) need not necessarily be used as they are for the first flow rate value Q1 and the second flow rate value Q2.

Therefore, values calculated by equations obtained by removing the constant terms from Equations (1), (2), and (3) may be used as the first flow rate value Q1 and the second flow rate value Q2. In this case, the first flow rate value Q1 and the second flow rate value Q2 can be corrected by multiplying the calculated values by appropriate coefficients.

For example, Equation (11) obtained by removing the constant term from Equation (1) may be used for the first flow rate value Q1. In the case where the flow of the gas G forming a turbulent flow is a subsonic flow, Equation (12) obtained by removing the constant term from Equation (2) may be used for the second flow rate value Q2. In the case where the flow of the gas G forming a turbulent flow is a sonic flow, Equation (13) obtained by removing the constant term from Equation (3) may be used for the second flow rate value Q2. $Q 1 = \frac{\left(P1+P2\right)}{2} ⋅ \left(P1-P2\right) ⋅ f \left(T\right)$ $Q 2 = \sqrt{\left(P2+0.1\right) ⋅ \left(P1-P2\right)} ⋅ g \left(T\right)$ $Q 2 = \frac{\left(P1+0.1\right)}{2} ⋅ g \left(T\right)$

Concerning the above-described disclosure, the following supplementary notes are further disclosed.

### (Supplementary Note 1)

The flow rate estimating device (20) includes the first flow rate calculation unit (64) configured to calculate the first flow rate value (Q1) of the gas (G) flowing through the interior of the passage (10) in the case where the gas (G) forms the laminar flow, the second flow rate calculation unit (66) configured to calculate the second flow rate value (Q2) of the gas in the case where the gas forms a turbulent flow, and the estimating unit (68) configured to estimate the flow rate of the gas by performing the weighted averaging of the first flow rate value and the second flow rate value using the proportion (α) based on the passage width (D) and the passage length (L) of the passage. In accordance with such a configuration, the flow rate of the gas can be estimated more accurately than in the related art. Further, since the passage length of the passage 10 can be suppressed, the flow rate estimating device can be downsized.

### (Supplementary Note 2)

In the flow rate estimating device according to Supplementary Note 1, the estimating unit may perform the weighted averaging of the first flow rate value and the second flow rate value by summing the value obtained by multiplying the first flow rate value by the proportion, which is greater than or equal to 0 and less than or equal to 1, and the value obtained by multiplying the second flow rate value by the value obtained by subtracting the proportion from 1. In accordance with such a configuration, the flow rate of the gas can be easily estimated.

### (Supplementary Note 3)

In the flow rate estimating device according to Supplementary Note 2, the proportion may be larger as the passage width is narrower or the passage length is longer. In accordance with such a configuration, the flow rate of the gas can be easily estimated.

### (Supplementary Note 4)

In the flow rate estimating device according to Supplementary Note 1, in the case where the plurality of the passages are provided, the proportion may be determined on the basis of the passage width and the passage length of each of the plurality of passages. In accordance with such a configuration, even when the plurality of passages having the same dimension are provided, it is not necessary to change the proportion.

### (Supplementary Note 5)

The flow rate estimating device according to Supplementary Note 1 may further include the pressure acquisition unit (60) configured to acquire the first pressure (P1) of the gas flowing into the interior of the passage from the first pressure sensor (36) and acquire the second pressure (P2) of the gas flowing out of the passage from the second pressure sensor (38), wherein the first flow rate calculation unit may calculate the first flow rate value on the basis of the pressure difference between the first pressure and the second pressure, and the second flow rate calculation unit may calculate the second flow rate value on the basis of the first pressure or the square root of the pressure difference. In accordance with such a configuration, the flow rate of the gas can be estimated even when the gas flowing in the passage forms any of a laminar flow, a turbulent flow, and a flow in which the laminar flow and the turbulent flow are mixed.

### (Supplementary Note 6)

The flow rate estimating device according to Supplementary Note 5 may further include the temperature acquisition unit (62) configured to acquire the temperature (T1) of the gas, wherein the first flow rate calculation unit may calculate the first flow rate value on the basis of the pressure difference and the temperature of the gas, the second flow rate calculation unit may calculate the second flow rate value on the basis of the temperature of the gas, and the pressure difference or the first pressure, in the case where the pressure ratio of the first pressure to the second pressure is smaller than the predetermined ratio, the second flow rate calculation unit may calculate the second flow rate value using the pressure difference, and in the case where the pressure ratio is greater than or equal to the predetermined ratio, the second flow rate calculation unit may calculate the second flow rate value using the first pressure. In accordance with such a configuration, the flow rate of the gas can be estimated more accurately in consideration of the temperature change of the gas.

### (Supplementary Note 7)

In the flow rate estimating device according to any one of Supplementary Notes 1 to 6, the estimating unit may estimate the flow rate of the gas by correcting the weighted average value (QWA) obtained by performing the weighted averaging of the first flow rate value and the second flow rate value, on the basis of the temperature (T2) of the passage and the temperature (T3) around the passage. In accordance with such a configuration, the flow rate of the gas can be estimated more accurately in consideration of the temperature change of the passage and the temperature change around the passage.

### (Supplementary Note 8)

In the flow rate estimating device according to Supplementary Note 1, the passage may have the rectangular cross section (RS) and be formed in the plate-shaped member (80), and the aspect ratio (R) of the rectangle formed by the outer periphery of the rectangular cross section may be greater than or equal to 1 or less than or equal to 2.

### (Supplementary Note 9)

The flow rate estimating method includes the first flow rate calculation step of calculating the first flow rate value of the gas flowing through the interior of the passage in the case where the gas forms the laminar flow, the second flow rate calculation step of calculating the second flow rate value of the gas in the case where the gas forms the turbulent flow, and the estimation step of estimating the flow rate of the gas by performing the weighted averaging of the first flow rate value and the second flow rate value using the proportion based on the passage width and the passage length of the passage. In accordance with such a configuration, the flow rate of the gas can be estimated more accurately than in the related art. In addition, the passage length of the passage 10 can be suppressed.

### (Supplementary Note 10)

In the flow rate estimating method according to the Supplementary Note 9, in the estimation step, the weighted averaging of the first flow rate value and the second flow rate value may be performed by summing the value obtained by multiplying the first flow rate value by the proportion, which is greater than or equal to 0 and less than or equal to 1, and the value obtained by multiplying the second flow rate value by the value obtained by subtracting the proportion from 1. In accordance with such a configuration, the flow rate of the gas can be easily estimated.

### (Supplementary Note 11)

In the flow rate estimating method according to Supplementary Note 10, the proportion may be larger as the passage width is narrower or the passage length is longer. In accordance with such a configuration, the flow rate of the gas can be easily estimated.

### (Supplementary Note 12)

In the flow rate estimating method according to Supplementary Note 9, in the case where the plurality of passages are provided, the proportion may be determined on the basis of the passage width and the passage length of each of the plurality of passages. In accordance with such a configuration, even when the plurality of passages having the same dimension are provided, it is not necessary to change the proportion.

### (Supplementary Note 13)

The flow rate estimating method according to Supplementary Note 9 may further include the pressure acquisition step of acquiring the first pressure of the gas flowing into the interior of the passage from the first pressure sensor and acquiring the second pressure of the gas flowing out of the passage from the second pressure sensor, wherein in the first flow rate calculation step, the first flow rate value may be calculated on the basis of the pressure difference between the first pressure and the second pressure, and in the second flow rate calculation step, the second flow rate value may be calculated on the basis of the first pressure or the square root of the pressure difference. In accordance with such a configuration, the flow rate of the gas can be estimated even when the gas flowing in the passage forms any of a laminar flow, a turbulent flow, and a flow in which the laminar flow and the turbulent flow are mixed.

### (Supplementary Note 14)

The flow rate estimating method according to Supplementary Note 13 may further include the temperature acquisition step of acquiring the temperature of the gas, wherein in the first flow rate calculation step, the first flow rate value may be calculated on the basis of the pressure difference and the temperature of the gas, in the second flow rate calculation step, the second flow rate value may be calculated on the basis of the temperature of the gas, and the pressure difference or the first pressure, in the case where the pressure ratio of the first pressure to the second pressure is smaller than a predetermined ratio, the second flow rate value may be calculated by using the pressure difference, and in the case where the pressure ratio is greater than or equal to the predetermined ratio, the second flow rate value may calculated by using the first pressure. In accordance with such a configuration, the flow rate of the gas can be estimated more accurately in consideration of the temperature change of the gas.

### (Supplementary Note 15)

In the flow rate estimating method according to any one of Supplementary Notes 9 to 14, in the estimation step, the flow rate of the gas may be estimated by correcting the weighted average value obtained by performing the weighted averaging of the first flow rate value and the second flow rate value, on the basis of the temperature of the passage and the temperature around the passage.

It should be noted that the present invention is not limited to the disclosure described above, and various configurations could be adopted therein without departing from the essence and gist of the present invention.

## Claims

1. A flow rate estimating device (20) comprising:
a first flow rate calculation unit (64) configured to calculate a first flow rate value (Q1) of a gas (G) flowing through an interior of a passage (10) in a case where the gas (G) forms a laminar flow;
a second flow rate calculation unit (66) configured to calculate a second flow rate value (Q2) of the gas in a case where the gas forms a turbulent flow; and
an estimating unit (68) configured to estimate a flow rate of the gas by performing weighted averaging of the first flow rate value and the second flow rate value using a proportion (α) based on a passage width (D) and a passage length (L) of the passage.

2. The flow rate estimating device according to claim 1, wherein the estimating unit performs the weighted averaging of the first flow rate value and the second flow rate value by summing a value obtained by multiplying the first flow rate value by the proportion, which is greater than or equal to 0 and less than or equal to 1, and a value obtained by multiplying the second flow rate value by a value obtained by subtracting the proportion from 1.

3. The flow rate estimating device according to claim 2, wherein the proportion is larger as the passage width is narrower or the passage length is longer.

4. The flow rate estimating device according to claim 1, wherein, in a case where a plurality of the passages are provided, the proportion is determined on a basis of the passage width and the passage length of each of the plurality of passages.

5. The flow rate estimating device according to claim 1, further comprising a pressure acquisition unit (60) configured to acquire a first pressure (P1) of the gas flowing into the interior of the passage from a first pressure sensor (36) and acquire a second pressure (P2) of the gas flowing out of the passage from a second pressure sensor (38),
wherein the first flow rate calculation unit calculates the first flow rate value on a basis of a pressure difference between the first pressure and the second pressure, and
the second flow rate calculation unit calculates the second flow rate value on a basis of the first pressure or a square root of the pressure difference.

6. The flow rate estimating device according to claim 5, further comprising a temperature acquisition unit (62) configured to acquire a temperature (T1) of the gas,
wherein the first flow rate calculation unit calculates the first flow rate value on a basis of the pressure difference and the temperature of the gas,
the second flow rate calculation unit calculates the second flow rate value on a basis of the temperature of the gas, and the pressure difference or the first pressure,
in a case where a pressure ratio of the first pressure to the second pressure is smaller than a predetermined ratio, the second flow rate calculation unit calculates the second flow rate value using the pressure difference, and
in a case where the pressure ratio is greater than or equal to the predetermined ratio, the second flow rate calculation unit calculates the second flow rate value using the first pressure.

7. The flow rate estimating device according to any one of claims 1 to 6, wherein the estimating unit estimates the flow rate of the gas by correcting a weighted average value (QWA) obtained by performing the weighted averaging of the first flow rate value and the second flow rate value, on a basis of a temperature (T2) of the passage and a temperature (T3) around the passage.

8. The flow rate estimating device according to claim 1, wherein the passage has a rectangular cross section (RS) and is formed in a plate-shaped member (80), and
an aspect ratio (R) of a rectangle formed by an outer periphery of the rectangular cross section is greater than or equal to 1 or less than or equal to 2.

9. A flow rate estimating method comprising:
a first flow rate calculation step of calculating a first flow rate value of a gas flowing through an interior of a passage in a case where the gas forms a laminar flow;
a second flow rate calculation step of calculating a second flow rate value of the gas in a case where the gas forms a turbulent flow; and
an estimation step of estimating a flow rate of the gas by performing weighted averaging of the first flow rate value and the second flow rate value using a proportion based on a passage width and a passage length of the passage.

10. The flow rate estimating method according to claim 9, wherein in the estimation step, the weighted averaging of the first flow rate value and the second flow rate value is performed by summing a value obtained by multiplying the first flow rate value by the proportion, which is greater than or equal to 0 and less than or equal to 1, and a value obtained by multiplying the second flow rate value by a value obtained by subtracting the proportion from 1.

11. The flow rate estimating method according to claim 10, wherein the proportion is larger as the passage width is narrower or the passage length is longer.

12. The flow rate estimating method according to claim 9, wherein, in a case where a plurality of the passages are provided, the proportion is determined on a basis of the passage width and the passage length of each of the plurality of passages.

13. The flow rate estimating method according to claim 9, further comprising a pressure acquisition step of acquiring a first pressure of the gas flowing into the interior of the passage from a first pressure sensor and acquiring a second pressure of the gas flowing out of the passage from a second pressure sensor,
wherein in the first flow rate calculation step, the first flow rate value is calculated on a basis of a pressure difference between the first pressure and the second pressure, and
in the second flow rate calculation step, the second flow rate value is calculated on a basis of the first pressure or a square root of the pressure difference.

14. The flow rate estimating method according to claim 13, further comprising a temperature acquisition step of acquiring a temperature of the gas,
wherein in the first flow rate calculation step, the first flow rate value is calculated on a basis of the pressure difference and the temperature of the gas,
in the second flow rate calculation step, the second flow rate value is calculated on a basis of the temperature of the gas, and the pressure difference or the first pressure,
in a case where a pressure ratio of the first pressure to the second pressure is smaller than a predetermined ratio, the second flow rate value is calculated by using the pressure difference, and
in a case where the pressure ratio is greater than or equal to the predetermined ratio, the second flow rate value is calculated by using the first pressure.

15. The flow rate estimating method according to any one of claims 9 to 14, wherein, in the estimation step, the flow rate of the gas is estimated by correcting a weighted average value obtained by performing the weighted averaging of the first flow rate value and the second flow rate value, on a basis of a temperature of the passage and a temperature around the passage.
